# EUROPEAN PATENT SPECIFICATION

(11) **EP 3 070 283 B1**
(45) Date of publication and mention of the grant of the patent: **12.07.2017**
(21) Application number: 16159450.2
(22) Date of filing: 09.03.2016
(51) Int. Cl.: F01N 3/08, F01N 3/28, F01N 5/02, F01N 9/00, F01N 13/08, F01N 13/18, H05H 1/24, F01N 11/00, F01N 13/14, F01N 3/10, F01N 3/021

(54) **EXHAUST GAS TREATMENT APPARATUS AND EXHAUST GAS TREATMENT METHOD FOR INTERNAL COMBUSTION ENGINE**
ABGASNACHBEHANDLUNGSVORRICHTUNG UND ABGASNACHBEHANDLUNGSVERFAHREN FÜR DEN VERBRENNUNGSMOTOR
APPAREIL DE TRAITEMENT DE GAZ D'ÉCHAPPEMENT ET PROCÉDÉ DE TRAITEMENT DE GAZ D'ÉCHAPPEMENT POUR MOTEUR À COMBUSTION INTERNE

(30) Priority: 18.03.2015 JP 2015054855
(43) Date of publication of application: 21.09.2016
(73) Proprietor: TOYOTA JIDOSHA KABUSHIKI KAISHA, Toyota-shi, Aichi-ken, 471-8571 (JP)
(72) Inventor: YAMAMOTO, Kosuke, Toyota-shi, Aichi-ken, 471-8571 (JP)
(74) Representative: Winter, Brandl, Fürniss, Hübner, Röss, Kaiser, Polte - Partnerschaft mbB

(56) References cited:
- JP-A- 2012 038 587
- JP-A- 2016 076 350
- US-A1- 2013 097 978

## Description

### BACKGROUND OF THE INVENTION

### 1. Field of the Invention

The invention relates to an apparatus and method for treating exhaust gas that is emitted from an internal combustion engine.

### 2. Description of Related Art

If a vehicle is intended to be downsized, installation space for auxiliaries that are mounted on the vehicle is subjected to constraints, and various piping paths, and the like, should be significantly bent. For example, an exhaust gas turbine of a supercharger, a catalytic converter of an exhaust gas control apparatus, a muffler, and the like, are closely arranged in an exhaust passage that guides exhaust gas that is emitted from an internal combustion engine mounted on a vehicle, so an exhaust pipe that connects these devices need to be significantly bent.

Incidentally, the passage sectional area of the catalytic converter of the exhaust gas control apparatus may be about several times as large as the passage sectional area of the exhaust pipe for the purpose of increasing exhaust gas purification efficiency. In order to maximally utilize the purification performance of such a catalytic converter, it is required to decrease the space velocity of exhaust gas by diffusing exhaust gas, which flows into the catalytic converter, over the entire area of an end face of the catalytic converter. Therefore, a large-diameter casing that accommodates the catalytic converter and a small-diameter exhaust pipe that is connected to the casing are coupled to each other via a tapered member called a cone for diffusing exhaust gas.

However, with the above-described downsizing of the vehicle, the length of the tapered member tends to be extremely short. The flow direction of exhaust gas that passes through the catalytic converter often significantly differs from the flow direction of exhaust gas that flows from the exhaust pipe into the tapered member. In such a case, exhaust gas that flows along a wall face of the exhaust passage from the small-diameter exhaust pipe to the catalytic converter via the tapered member burbles away from the wall face of the exhaust passage at the connection point at which the exhaust pipe is connected to the tapered member. As a result, exhaust gas that passes through the tapered member flows into only the zone of part of the catalytic converter without diffusing so much, with the result that it is not possible to maximally utilize the purification performance of the catalytic converter.

In order to solve such an inconvenience, a technique for forcibly distributing the flow direction of exhaust gas by incorporating a louver in an exhaust pipe on the inlet side of the catalytic converter has been suggested in Japanese Patent Application Publication JP 2012-193719 A.

### SUMMARY OF THE INVENTION

When a louver member as described in JP 2012-193719 A is incorporated in the exhaust passage, passage resistance increases and, in addition, the louver member absorbs heat of exhaust gas at the time of a warm-up of the internal combustion engine, with the result that a time up to completion of a warm-up extends. This leads to deterioration of fuel economy.

The invention provides an exhaust gas treatment apparatus and exhaust gas treatment method that are able to diffuse exhaust gas over the entire area of a catalytic converter without increasing passage resistance as described in JP 2012-193719 A even with a configuration that the flow direction of exhaust gas from an exhaust pipe to the catalytic converter steeply bends.

The invention also provides an exhaust gas treatment apparatus and exhaust gas treatment method that, even when the amount of exhaust gas flowing into an exhaust gas treatment unit tends to reduce because of steep bending of an exhaust pipe, is able to prevent at least a reduction in the amount of exhaust gas flowing into the exhaust gas treatment unit without increasing passage resistance.

A first aspect of the invention provides an exhaust gas treatment apparatus for an internal combustion engine. The exhaust gas treatment apparatus includes: an exhaust gas treatment unit arranged in an exhaust passage of the internal combustion engine, the exhaust passage being configured such that i) exhaust gas flowing along a part of a wall face, which defines the exhaust passage, burbles away from the part of the wall face in an exhaust gas burble zone and ii) as a result of burble of exhaust gas away from the part of the wall face of the exhaust passage in the exhaust gas burble zone, exhaust gas disproportionately flows into the exhaust gas treatment unit or the amount of exhaust gas flowing into the exhaust gas treatment unit reduces; and a plasma actuator arranged at the part of the wall face of the exhaust passage in the exhaust gas burble zone, the plasma actuator being configured to generate air current toward the exhaust gas treatment unit along the part of the wall face in exhaust gas inside the exhaust passage.

In the invention, when the plasma actuator operates, air current is generated toward the exhaust gas treatment unit along the part of the wall face of the exhaust passage in the exhaust gas burble zone. Thus, exhaust gas flowing along the part of the wall face of the exhaust passage in the exhaust gas burble zone is dragged by the air current, flows without burbling away from the part of the wall face of the exhaust passage, and then flows into the exhaust gas treatment unit in a diffused state or a reduction in the amount of exhaust gas flowing into the exhaust gas treatment unit is suppressed.

With the exhaust gas treatment apparatus according to the invention, it is possible to cause exhaust gas to flow along the part of the wall face of the exhaust passage in the exhaust gas burble zone with the use of the plasma actuator without burble of exhaust gas away from the part of the wall face of the exhaust passage in the exhaust gas burble zone. As a result, it is possible to diffuse exhaust gas flowing from the exhaust gas burble zone into the exhaust gas treatment unit and cause the exhaust gas to flow over the entire area of the exhaust gas treatment unit without increasing passage resistance. Alternatively, it is possible to suppress or prevent a reduction in the amount of exhaust gas flowing into the exhaust gas treatment unit or increase the amount of exhaust gas flowing into the exhaust gas treatment unit.

In the exhaust gas treatment apparatus according to the invention, a sectional shape of the part of the wall face of the exhaust passage in the exhaust gas burble zone, taken along a flow direction of exhaust gas, may include a convex curved line.

When the sectional shape of the part of the wall face of the exhaust passage in the exhaust gas burble zone in which the plasma actuator is arranged, taken along the flow direction of exhaust gas, includes a convex curved line, the advantageous effect of the invention may be remarkably obtained.

The exhaust gas treatment apparatus may further comprise a controller configured to control the amount of energy that is input to the plasma actuator based on at least one of a flow rate of exhaust gas flowing through the exhaust passage and a temperature of a catalytic converter included in the exhaust gas treatment unit and configured to purify exhaust gas, and a temperature of a coolant of the internal combustion engine.

The exhaust gas treatment apparatus may further include a flow rate acquisition device configured to acquire a flow rate of exhaust gas flowing through the exhaust passage, and the controller may be configured to control the plasma actuator such that the amount of energy that is input to the plasma actuator increases as the acquired flow rate of exhaust gas increases. In this case, the exhaust gas treatment apparatus may further include a temperature acquisition device configured to acquire a temperature of the catalytic converter, and the controller may be configured to input energy to the plasma actuator, (only) when the acquired temperature of the catalytic converter is higher than or equal to an activation lower limit temperature of the catalytic converter. A mode of controlling the amount of energy that is input to the plasma actuator may include changing an applied voltage or a driving frequency.

The exhaust gas treatment unit may include a catalytic converter configured to purify exhaust gas, the exhaust gas treatment apparatus may further include a temperature acquisition device configured to acquire a temperature of the catalytic converter; and a controller configured to control the amount of energy that is input to the plasma actuator, and the controller may be configured to input energy to the plasma actuator, (only) when the acquired temperature of the catalytic converter is higher than or equal to an activation lower limit temperature of the catalytic converter.

When the exhaust gas treatment unit includes the catalytic converter for purifying exhaust gas, it is possible to cause exhaust gas to constantly flow over the entire area of the catalytic converter by controlling the plasma actuator such that the amount of energy that is input to the plasma actuator increases as the acquired flow rate of exhaust gas increases.

By inputting energy to the plasma actuator only when the acquired temperature of the catalytic converter is higher than or equal to the activation lower limit temperature of the catalytic converter, it is possible to avoid unnecessary energy consumption of the plasma actuator. Moreover, it is possible to facilitate purification of exhaust gas during a warm-up of the internal combustion engine by further quickly raising the temperature of part of the catalytic converter to the activation lower limit temperature or higher.

The controller may be configured to input energy to the plasma actuator, (only) when the acquired temperature of the catalytic converter is lower than or equal to an upper limit temperature of the catalytic converter. The upper limit temperature of the catalytic converter means a maximum temperature at or below which degradation, dissolution loss, or the like, of the catalytic converter due to heat does not occur. Therefore, it may be understood that degradation, dissolution loss, or the like, of the catalytic converter begins when the temperature exceeds the upper limit temperature.

By inputting energy to the plasma actuator only when the acquired temperature of the catalytic converter is lower than or equal to the upper limit temperature of the catalytic converter, it is possible to avoid unnecessary energy consumption of the plasma actuator.

A cylindrical heat insulation partition surrounding a zone of part of the catalytic converter along a flow direction of exhaust gas may be provided in the catalytic converter. The zone surrounded by the heat insulation partition may include a zone into which exhaust gas disproportionately flows as a result of burble of exhaust gas away from the part of the wall face of the exhaust passage in the exhaust gas burble zone. When the acquired temperature of the catalytic converter is lower than an activation lower limit temperature of the catalytic converter, a major portion of exhaust gas may be guided to the zone surrounded by the heat insulation partition. In this case, the length of the heat insulation partition along the flow direction of exhaust gas may be shorter than the length of the catalytic converter along the flow direction of exhaust gas, and an upstream end of the heat insulation partition along the flow direction of exhaust gas may be located at an upstream end of the catalytic converter along the flow direction of exhaust gas.

By guiding the major portion of exhaust gas to the zone of the catalytic converter, surrounded by the heat insulation partition, only when the temperature of the catalytic converter is lower than the activation lower limit temperature of the catalytic converter, it is possible to avoid unnecessary energy consumption of the plasma actuator. Moreover, it is possible to facilitate purification of exhaust gas during a warm-up of the internal combustion engine by further quickly raising the temperature of part of the catalytic converter to the activation lower limit temperature or higher.

When the length of the heat insulation partition is set so as to be shorter than the length of the catalytic converter and the upstream end of the heat insulation partition is located at the upstream end of the catalytic converter, it is possible to facilitate a warm-up of the internal combustion engine by using only the zone of the catalytic converter, surrounded by the heat insulation partition, during a warm-up. It is also possible to effectively use the entire area of the catalytic converter other than during a warm-up.

In this specification, the word "upstream" or "upstream side" means a side closer to a combustion chamber of the internal combustion engine; whereas, the word "downstream" or "downstream side" means a side away from the combustion chamber of the internal combustion engine.

The heat insulation partition may be an air layer.

When the heat insulation partition is an air layer, the heat insulation partition may be a simple air gap, so it is possible to extremely easily provide the heat insulation partition in the catalytic converter.

The acquired temperature of the catalytic converter may be a temperature of a zone different from a zone into which exhaust gas from a small-diameter portion flows because of the exhaust gas burble zone.

When the temperature of the zone of the catalytic converter, different from the zone into which exhaust gas from the small-diameter portion is caused to flow because of the exhaust gas burble zone, is acquired, it may be estimated that the temperature of the entire passage section of the catalytic converter including that zone is higher than or equal to the activation lower limit temperature.

The exhaust gas treatment apparatus may further include a particulate filter configured to trap particulate matter contained in exhaust gas, and the particulate filter may be arranged downstream of the catalytic converter.

When the particulate filter for trapping particulate matter contained in exhaust gas is arranged downstream of the catalytic converter, it is possible to facilitate a warm-up of the catalytic converter. Moreover, because soot contained in exhaust gas is oxidized by the operation of the plasma actuator, the amount of soot contained in exhaust gas that flows into the particulate filter through the catalytic converter reduces, and it is possible to reduce the frequency of the process of regenerating the particulate filter.

The exhaust passage may be branched into two branched exhaust passages by a partition wall extending along a flow direction of exhaust gas, and the exhaust gas treatment unit may include an exhaust heat recovery device arranged in one of the branched exhaust passages and configured to exchange heat between exhaust gas flowing through the one of the branched exhaust passages and coolant of the internal combustion engine, In this case, the exhaust gas burble zone may be located at a portion at which the exhaust passage is branched, and the exhaust passage may be configured such that the amount of exhaust gas flowing into the one of the branched exhaust passages reduces as a result of burble of exhaust gas away from a part of a wall face of the exhaust passage in the exhaust gas burble zone. The exhaust gas treatment apparatus may further include a coolant temperature sensor configured to acquire a temperature of coolant of the internal combustion engine, and the controller may be configured to input energy to the plasma actuator, (only) when the acquired temperature of coolant is lower than a temperature set in advance,.

When the exhaust gas treatment unit is arranged in the one of the branched exhaust passages into which the exhaust passage is branched by the partition wall and the exhaust gas treatment unit includes the exhaust heat recovery device for exchanging heat between exhaust gas flowing through the one of the branched exhaust passages and coolant of the internal combustion engine, it is possible to shorten a time that is required for a warm-up by raising the rate of rise in the temperature of coolant of the internal combustion engine.

By inputting energy to the plasma actuator only when the acquired temperature of coolant is lower than the temperature set in advance, it is possible to avoid unnecessary energy consumption of the plasma actuator.

A clearance from a part of the wall face, which defines the one of the branched exhaust passages, to the partition wall along a direction perpendicular to the partition wall may be set so as to be shorter than a clearance from the part of the wall face, which defines the one of the branched exhaust passages, to the wall face that defines the exhaust passage just before branching along the direction perpendicular to the partition wall.

When the clearance from a part of the wall face, which defines the one of the branched exhaust passages, to the partition wall is set so as to be shorter than the clearance from the part of the wall face, which defines the one of the branched exhaust passages, to the wall face that defines the exhaust passage just before branching, it is possible to make part of exhaust gas difficult to flow into the exhaust heat recovery device side after completion of a warm-up of the internal combustion engine. Thus, it is possible to suppress an unnecessary rise in the temperature of coolant.

A plurality of the exhaust gas treatment units may be arranged in series along the exhaust passage, the upstream-side exhaust gas treatment unit may include the above-described catalytic converter, and the downstream-side exhaust gas treatment unit may include the above-described exhaust heat recovery device.

When the plurality of the exhaust gas treatment units are arranged in series along the exhaust passage, the upstream-side exhaust gas treatment unit includes the catalytic converter, and the downstream-side exhaust gas treatment unit includes the exhaust heat recovery device, so it is possible to achieve both early activation of the catalytic converter and early completion of a warm-up during a warm-up of the internal combustion engine.

A second aspect of the invention provides an exhaust gas treatment method for an internal combustion engine, wherein an exhaust gas treatment unit is arranged in an exhaust passage of the internal combustion engine, the exhaust passage being configured such that exhaust gas flowing along a part of a wall face, which defines the exhaust passage, burbles away from the part of the wall face in an exhaust gas burble zone and ii) as a result of burble of exhaust gas away from the part of the wall face of the exhaust passage in the exhaust gas burble zone, exhaust gas disproportionately flows into the exhaust gas treatment unit arranged in the exhaust passage or the amount of exhaust gas flowing into the exhaust gas treatment unit reduces. The method comprises the steps of arranging a plasma actuator at the part of the wall face of the exhaust passage in the exhaust gas burble zone, and inputting energy to the plasma actuator so as to generate air current along the wall face of the exhaust passage in exhaust gas inside the exhaust passage.

The exhaust gas treatment method may include: acquiring a temperature of the catalytic converter; and, (only) when the acquired temperature of the catalytic converter is higher than or equal to an activation lower limit temperature of the catalytic converter, inputting energy to the plasma actuator.

With the exhaust gas treatment method according to this aspect of the invention, energy is input to the plasma actuator only when the temperature of the catalytic converter is higher than or equal to the activation lower limit temperature, so it is possible to suppress unnecessary energy consumption.

The exhaust gas treatment method may include: acquiring an exhaust gas flow rate; and causing exhaust gas to flow into the catalytic converter in a diffused state by applying larger energy to the plasma actuator as the acquired exhaust gas flow rate increases.

With the exhaust gas treatment method according to the this aspect of the invention, it is possible to cause exhaust gas, flowing from the exhaust gas burble zone into the catalytic converter, to flow over the entire area of the exhaust gas treatment unit by diffusing the exhaust gas without increasing passage resistance irrespective of the flow rate of the exhaust gas.

A sectional shape of the part of the wall face of the exhaust passage in the exhaust gas burble zone, taken along a flow direction of exhaust gas, may include a convex curved line.

A cylindrical heat insulation partition surrounding a zone of part of the catalytic converter along a flow direction of exhaust gas may be provided in the catalytic converter. The zone surrounded by the heat insulation partition may include a zone into which exhaust gas disproportionately flows as a result of burble of exhaust gas away from the part of the wall face of the exhaust passage in the exhaust gas burble zone.

The exhaust passage may be branched into two by a partition wall extending along a flow direction of exhaust gas. An exhaust heat recovery device may be arranged in one of the branched exhaust passages and configured to exchange heat between exhaust gas flowing through the one of the branched exhaust passages and coolant of the internal combustion engine. The exhaust gas burble zone may be provided at a portion at which the exhaust passage is branched. The exhaust passage may be configured such that, at the time when part of exhaust gas flows into the one of the branched exhaust passages, the amount of exhaust gas flowing into the one of the branched exhaust passages reduces as a result of burble of exhaust gas, flowing along a part of a wall face, which defines the exhaust passage, away from the part of the wall face. The plasma actuator may be arranged at the part of the wall face of the exhaust passage in the exhaust gas burble zone so as to suppress burble of exhaust gas away from the wall face of the exhaust passage. The plasma actuator is configured to generate air current along the wall face of the exhaust passage. The exhaust gas treatment method may include: acquiring a temperature of coolant of the internal combustion engine; and, (only) when the acquired temperature of coolant is lower than a temperature set in advance, facilitating flow of exhaust gas into the one of the branched exhaust passages by inputting energy to the plasma actuator.

With the exhaust gas treatment method according to the this aspect of the invention, energy is input to the plasma actuator only when the temperature of coolant is low, so it is possible to shorten a time that is required to warm-up the internal combustion engine by raising the rate of rise in the temperature of coolant.

In the exhaust gas treatment method according to this aspect of the invention, a clearance from a part of the wall face, which defines the one of the branched exhaust passages, to the partition wall along a direction perpendicular to the partition wall may be set so as to be shorter than a clearance from the part of the wall face, which defines the one of the branched exhaust passages, to the wall face that defines the exhaust passage just before branching along the direction perpendicular to the partition wall.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a conceptual view of an embodiment in which the invention is applied to a vehicle on which a compression-ignition multi-cylinder internal combustion engine is mounted;
FIG. 2 is a control block diagram of a main portion in the embodiment shown in FIG. 1;
FIG. 3 is an extracted enlarged cross-sectional view of an exhaust gas treatment unit in the embodiment shown in FIG. 1;
FIG. 4 is a further extracted enlarged electrical circuit configuration diagram that schematically shows part of a first exhaust gas burble zone shown in FIG. 3;
FIG. 5 is a map that schematically shows the relationship between an exhaust gas flow rate and a voltage applied to a plasma actuator;
FIG. 6 is a graph that schematically shows a change in the temperature of a catalytic converter;
FIG. 7 is an extracted enlarged cross-sectional view of an exhaust gas treatment unit in another embodiment of the invention;
FIG. 8 is a flowchart that shows the procedure of controlling the plasma actuator in the catalytic converter; and
FIG. 9 is a flowchart that shows the procedure of controlling the plasma actuator for an exhaust heat recovery device.

### DETAILED DESCRIPTION OF EMBODIMENTS

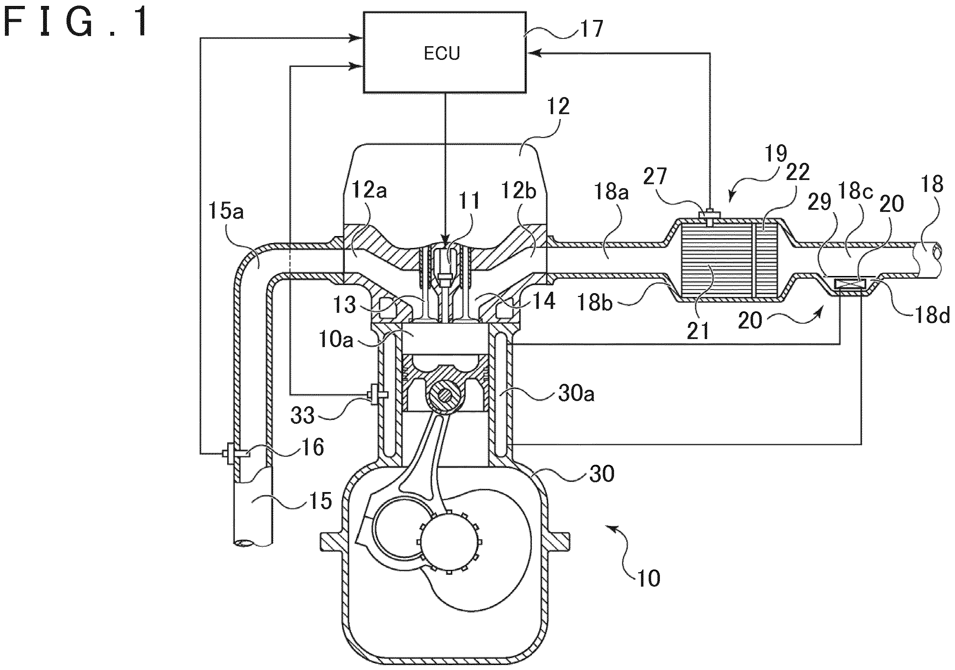

An embodiment in which the invention is applied to a vehicle on which a compression-ignition multi-cylinder internal combustion engine (engine) 10 is mounted will be described in detail with reference to FIG. 1 to FIG. 9. However, the invention is not limited to this embodiment. The configuration of the embodiment may be freely modified in response to a required characteristic. For example, the invention is also effective in a spark-ignition internal combustion engine that uses gasoline, alcohol, liquefied natural gas (LNG), or the like, as fuel and ignites the fuel with the use of an ignition plug.

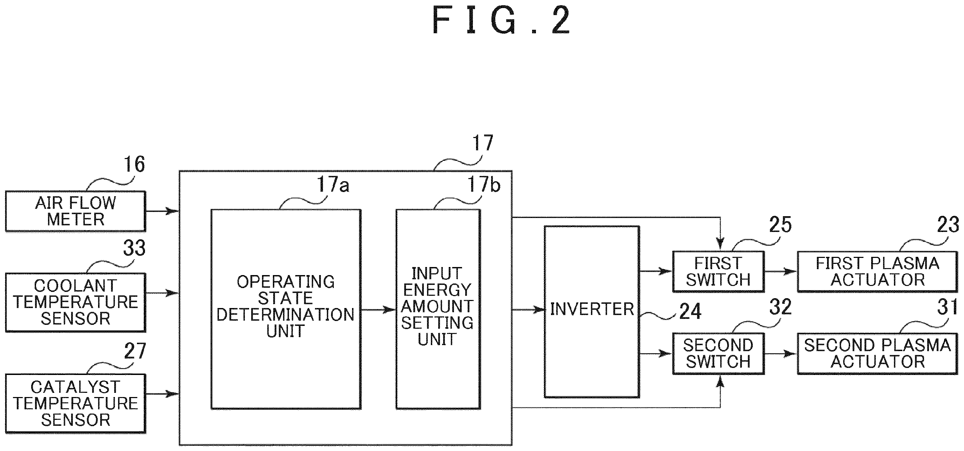

FIG. 1 schematically shows a main portion of an engine system in the present embodiment. FIG. 2 roughly shows control blocks of the main portion. An exhaust gas turbocharger, an EGR device, and the like, which are typical auxiliaries of the engine 10, are omitted from FIG. 1. It should be noted that various sensors that are required to smoothly operate the engine 10 are also partially omitted for the sake of convenience.

The engine 10 in the present embodiment is a self-ignition, that is, compression-ignition multi-cylinder internal combustion engine that causes light oil, biofuel or composite fuel of them, as fuel, to naturally ignite by directly injecting the fuel from any one of fuel injection valves 11 into a corresponding one of combustion chambers 10a, which is placed in a compression state. However, in view of the characteristic of the invention, the engine 10 may be a single-cylinder internal combustion engine.

A cylinder head 12 has intake ports 12a and exhaust ports 12b that face the corresponding combustion chambers 10a. A valve actuating mechanism is incorporated in the cylinder head 12. The valve actuating mechanism includes intake valves 13 and exhaust valves 14. Each of the intake valves 13 opens or closes a corresponding one of the intake ports 12a. Each of the exhaust valves 14 opens or closes a corresponding one of the exhaust ports 12b. Each fuel injection valve 11 is provided at the center of the upper end of a corresponding one of the combustion chambers 10a. Each fuel injection valve 11 is assembled to the cylinder head 12 so as to be placed between the intake valve 13 and the exhaust valve 14.

An intake pipe 15 is connected to the intake ports 12a of the cylinder head 12. The intake pipe 15 defines an intake passage 15a together with the intake ports 12a. An air flow meter 16 is installed at the upstream side of the intake pipe 15. Information about an intake air flow rate detected by the air flow meter 16 is output to an ECU 17. In the present embodiment, the air flow meter 16 is used as a flow rate acquisition device in the invention. Instead, an exhaust gas flow rate may be acquired from an additional air flow meter provided in an exhaust passage 18a (described later) or may be calculated from an engine rotation speed, an intake air temperature and an intake air pressure. Alternatively, an exhaust gas flow velocity may be acquired instead of an exhaust gas flow rate.

The ECU 17 that serves as a controller in the invention includes not only a known microprocessor but also a CPU, a ROM, a RAM, a nonvolatile memory, input/output interfaces, and the like, which are connected to one another via a data bus (not shown). The ECU 17 in the present embodiment includes an operating state determination unit 17a. The operating state determination unit 17a determines the operating state of the vehicle on the basis of information from the air flow meter 16, various sensors (described later), and the like.

An exhaust pipe 18 is coupled to the cylinder head 12 such that the exhaust passage 18a communicates with the exhaust ports 12b. The exhaust pipe 18 defines the exhaust passage 18a. An exhaust gas control apparatus 19 and an exhaust heat recovery device 20 are arranged in order from the upstream side of the exhaust passage 18a in the exhaust passage 18a at a portion upstream of a muffler (not shown) arranged at the downstream end side of the exhaust passage 18a.

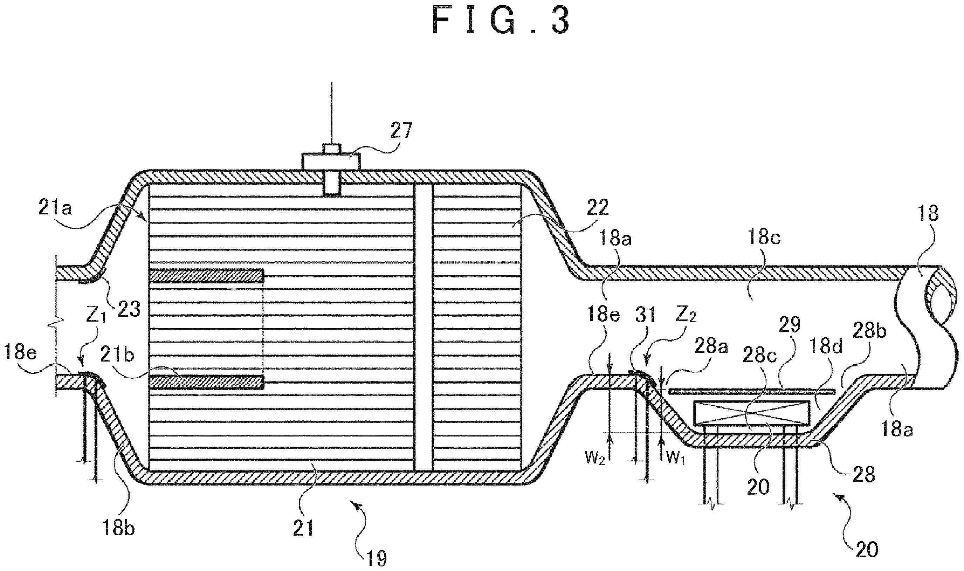

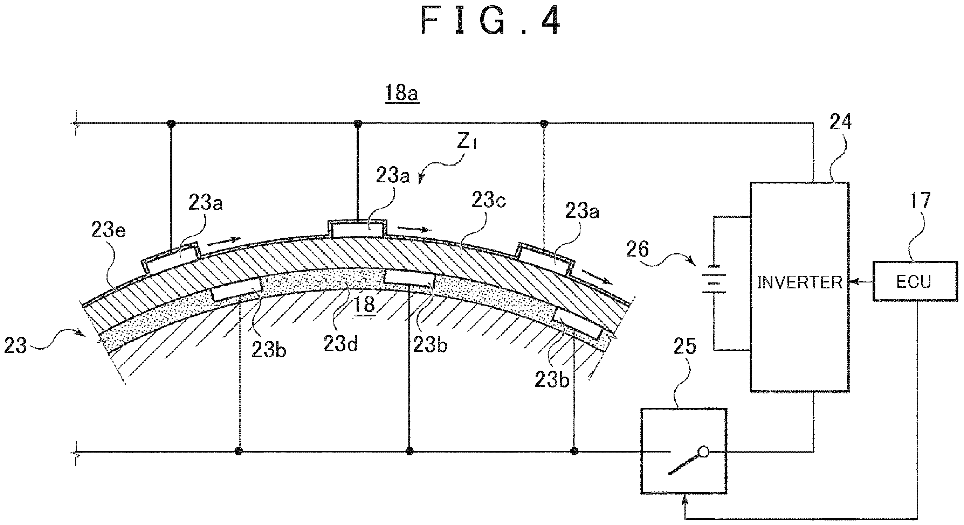

FIG. 3 shows an extracted enlarged view of a portion including the exhaust gas control apparatus 19 and the exhaust heat recovery device 20. FIG. 4 shows the schematic configuration of a plasma actuator in the present embodiment.

The exhaust gas control apparatus 19 in the present embodiment includes a diesel oxidation catalytic converter (DOC) 21 and a diesel particulate filter (DPF) 22. The DOC 21 serves as a first exhaust gas treatment unit in the invention. The DPF 22 is arranged downstream of the DOC 21. The DOC 21 is used to detoxify toxic substances that are produced through combustion of air-fuel mixture in the combustion chambers 10a. The DPF 22 is used to trap particulate matter contained in exhaust gas. A catalytic converter, other than the DOC 21 or the DPF 22, may be further incorporated in the exhaust gas control apparatus 19.

When the invention is applied to a spark-ignition internal combustion engine, a compact three-way catalyst is typically used as the first exhaust gas treatment unit of the invention instead of the DOC 21.

There is a first exhaust gas burble zone Z₁ in the exhaust passage 18a just on the upstream side of the DOC 21. The first exhaust gas burble zone Z₁ is a zone in which exhaust gas flowing along a part of a wall face 18e, which defines the exhaust passage 18a, burbles away from the part of the wall face 18e and, as a result, exhaust gas disproportionately flows into an upstream end face 21a of the DOC 21. Usually, the first exhaust gas burble zone Z₁ is located at the upstream end side of a cone portion 18b in which the passage sectional area of the exhaust pipe 18 steeply increases, and the sectional shape of the part of the wall face 18e of the exhaust passage 18a in the first exhaust gas burble zone Z₁, taken along the flow direction of exhaust gas, includes a convex curved line shown in FIG. 3.

A first plasma actuator 23 is arranged at the part of the wall face 18e of the exhaust passage 18a in the first exhaust gas burble zone Z₁. The first plasma actuator 23 is used to generate air current toward the DOC 21 along the part of the wall face 18e. The principle, basic configuration, and the like, of the first plasma actuator 23 are known in Japanese Patent Application Publication JP 2012-180799 A, or the like, and will be simply described below. The first plasma actuator 23 in the present embodiment is formed of a group of first electrodes 23a, a group of second electrodes 23b, a dielectric layer 23c and an insulation layer 23d as main components. The first plasma actuator 23 further includes an inverter 24, a first switch 25, and the like. The group of first electrodes 23a are arranged at set intervals on one surface of the thin-film dielectric layer 23c, facing toward the exhaust passage 18a. The group of second electrodes 23b are arranged at the set intervals same as the group of first electrodes 23a on the other surface of the dielectric layer 23c, facing toward the wall face 18e that defines the exhaust passage 18a. The insulation layer 23d coats the group of second electrodes 23b, and is bonded to the wall face 18e that defines the exhaust passage 18a. In the present embodiment, in order to prevent degradation and corrosion of the group of first electrodes 23a due to exhaust gas flowing through the exhaust passage 18a, the group of first electrodes 23a are coated with a thin-film insulation protection layer 23e. The group of second electrodes 23b are arranged slightly offset to the downstream side in relative position with respect to the group of first electrodes 23a along an arrangement direction in which the groups of first and second electrodes 23a, 23b are arranged. The arrangement direction is parallel to the flow direction of exhaust gas flowing through the exhaust passage 18a. The group of second electrodes 23b are connected to the inverter 24 via the first switch 25. The on/off operation of the first switch 25, that is, the on/off state of energization to the first plasma actuator 23, is controlled by the ECU 17.

It should be noted that, because the thickness of the first plasma actuator 23 is extremely thin and is about several micrometers to several hundreds of micrometers, the first plasma actuator 23 installed on the wall face 18e that defines the exhaust passage 18a does not substantially interfere with flow of exhaust gas. The first plasma actuator 23 does not need to be arranged over the entire circumference of the exhaust passage 18a in the first exhaust gas burble zone Z₁. The first plasma actuator 23 may be arranged only at a portion having a particularly large curvature in the first exhaust gas burble zone Z₁. In the invention, because the first plasma actuator 23 is arranged in the high-temperature exhaust passage 18a, the groups of electrodes 23a, 23b, the dielectric layer 23c, the insulation layer 23d, the insulation protection layer 23e, and the like, are desirably made of materials having high heat resistance. As such materials, for example, the electrodes may be made of iron or nickel and the dielectric layer 23c, the insulation layer 23d and the insulation protection layer 23e may be made of ceramics, or the like.

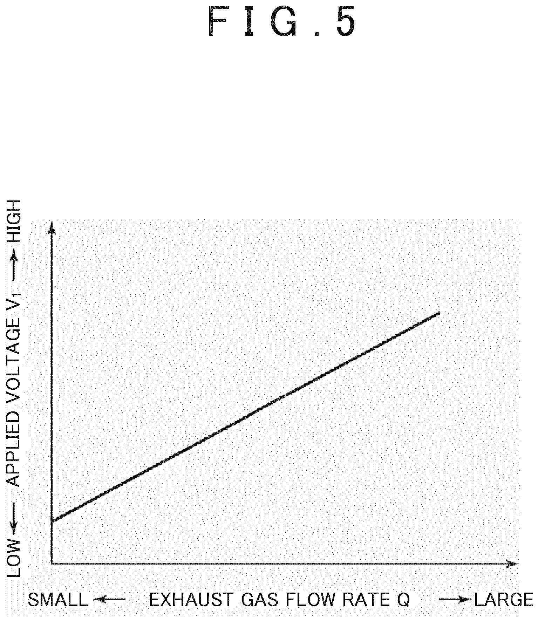

An input energy amount setting unit 17b of the ECU 17 stores a map shown in FIG. 5. The relationship between a flow rate Q of exhaust gas flowing through the exhaust passage 18a per unit time and a voltage V₁ that is applied to the first plasma actuator 23 is set in advance in the map. Basically, the operation of the first plasma actuator 23 is controlled via the first switch 25 such that the amount of energy that is input to the first plasma actuator 23 increases as the exhaust gas flow rate Q increases. In the present embodiment, the input energy amount setting unit 17b sets the voltage V₁ that is applied to the first plasma actuator 23, as the amount of energy that is input to the first plasma actuator 23, on the basis of information from the above-described air flow meter 16. The inverter 24 is supplied with electric power from an in-vehicle secondary battery 26. The inverter 24 is able to change the output voltage, for example, within the range of about 1 to 10 kV. The inverter 24 applies the voltage V₁, set by the input energy amount setting unit 17b, to the first plasma actuator 23 at a predetermined driving frequency via the first switch 25, of which the on/off state is controlled by the ECU 17.

As a mode of controlling the amount of energy that is input to the first plasma actuator 23, the amount of input energy is controlled by changing the voltage V₁ that is applied to the first plasma actuator 23 in the present embodiment. However, it is also possible to control the amount of input energy by changing the driving frequency of the first plasma actuator 23, for example, within the range of about 1 to 10 kHz. Alternatively, the amount of input energy may be controlled by changing both the applied voltage V₁ and the driving frequency or a similar advantageous effect may be obtained by applying direct-current pulse voltage to the first plasma actuator 23.

When the high-frequency high voltage V₁ is applied between the group of first electrodes 23a and the group of second electrodes 23b in this way, plasma is generated in a surface zone of the insulation protection layer 23e just downstream of each individual first electrode 23a, and air current indicated by the arrows in FIG. 4 is generated accordingly. Exhaust gas intervening therearound is dragged by such generated air current and is prevented from burbling away from the wall face 18e that defines the exhaust passage 18a, with the result that the exhaust gas flows into the upstream end face 21a of the DOC 21 in a diffused state. In this case, the strength of air current that is generated as a result of generation of plasma is directly proportional to the amount of energy that is input to the groups of first and second electrodes 23a, 23b.

When the DPF 22 is arranged downstream of the DOC 21 as in the case of the present embodiment, soot contained in exhaust gas is oxidized by the operation of the first plasma actuator 23, so it is possible to further reduce the amount of soot contained in exhaust gas flowing into the DPF 22 through the DOC 21. As a result, it is possible to reduce the frequency of the process of regenerating the DPF 22.

A catalyst temperature sensor 27 is attached to the DOC 21 as a temperature acquisition device configured to acquire a temperature T_{C} of a catalytic converter according to the invention. Information about the temperature T_{C} of the DOC 21, acquired by the catalyst temperature sensor 27, is output to the ECU 17. The ECU 17 applies the high voltage V₁ to the first plasma actuator 23 by switching the first switch 25 to an energized state only when the temperature T_{C} of the DOC 21 is higher than or equal to an activation lower limit temperature T_{CL} of the DOC 21 and the temperature T_{C} of the DOC 21 is lower than or equal to an upper limit temperature T_{CH} of the DOC 21.

The temperature T_{C} of the DOC 21, acquired by the catalyst temperature sensor 27, is desirably the temperature of a zone different from a zone into which exhaust gas flows because of the first exhaust gas burble zone Z₁, that is, a zone into which exhaust gas is difficult to flow. In the present embodiment, the temperature of an outer peripheral end of the DOC 21 at a portion downstream of a heat insulation partition 21b (described later) is acquired. Instead of the catalyst temperature sensor 27, an exhaust gas temperature sensor for detecting an exhaust gas temperature may be arranged at at least one of a portion upstream of the exhaust gas control apparatus 19 and a portion downstream of the exhaust gas control apparatus 19, and the temperature T_{C} of the DOC 21 may be estimated on the basis of detected information from the exhaust gas temperature sensor. Alternatively, a temporal change in the temperature T_{C} of the DOC 21 from the start of a warm-up may be obtained in advance by an experiment, and the temperature T_{C} of the DOC 21 may be estimated on the basis of a time from the start of the warm-up.

The cylindrical heat insulation partition 21b made of a heat-resistant material having a lower thermal conductivity than air, such as Porextherm WDS (trademark) produced by Kurosaki Harima Corporation, is provided at the upstream end of the DOC 21 in the DOC 21 in the present embodiment. Instead of using such a special material, the heat insulation partition 21b may be an air layer. In this case, a cylindrical air gap just needs to be provided in the DOC 21. The zone surrounded by the cylindrical heat insulation partition 21b is a zone in which exhaust gas disproportionately flows into the DOC 21 as a result of burble of exhaust gas in the first exhaust gas burble zone Z₁ in a state where the first plasma actuator 23 is not operated. Usually, the passage sectional area of the heat insulation partition 21b is substantially equal to or slightly larger than the passage sectional area of the exhaust pipe 18 that is connected to the cone portion 18b in the first exhaust gas burble zone Z₁, and the outline shape of the heat insulation partition 21b is similar to the sectional shape of the exhaust pipe 18. Thus, in a state where the first plasma actuator 23 is not operated, it is possible to guide the major portion of exhaust gas to the zone of the DOC 21, surrounded by the heat insulation partition 21b. Thus, it is possible to quickly raise the temperature of only the zone of the DOC 21, surrounded by the heat insulation partition 21b, during a warm-up of the engine 10. The length of the heat insulation partition 21b along the longitudinal direction of the DOC 21 (the flow direction of exhaust gas) is desirably smaller than or equal to a half of the DOC 21 and may be about one-third or one quarter of the DOC 21.

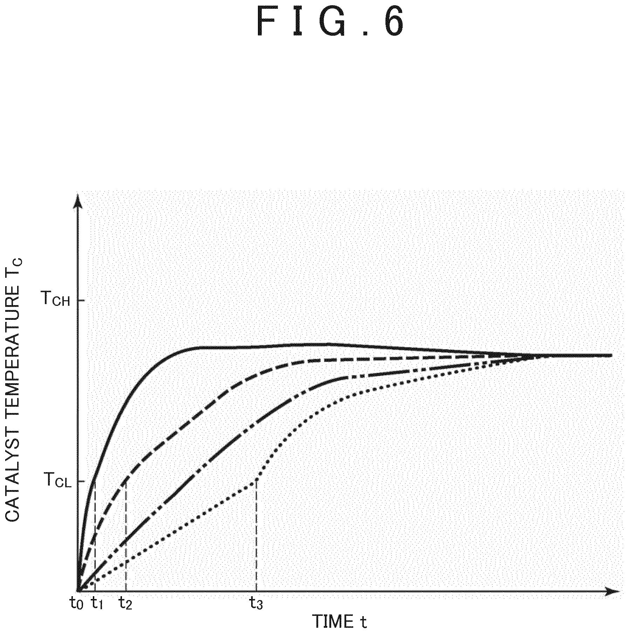

FIG. 6 schematically shows the temperature rise characteristic of the DOC 21 according to the present embodiment during a warm-up of the engine 10. The continuous line in FIG. 6 indicates a temperature change at the center portion of the upstream end face 21a of the DOC 21, surrounded by the heat insulation partition 21b, in a state where the first plasma actuator 23 is not operated. The dashed line in FIG. 6 indicates a temperature change at the center portion of the upstream end of the DOC 21 in the case where the heat insulation partition 21b is not provided in a state where the first plasma actuator 23 is not operated. The alternate long and two-short dashes line in FIG. 6 indicates a temperature change at the center portion of the upstream end face 21a in the case where exhaust gas flows into the DOC 21 in the case where the heat insulation partition 21b is not provided in a state where exhaust gas is diffused by operating the first plasma actuator 23. The dotted line in FIG. 6 indicates a temperature change of a zone of which the temperature is detected by the catalyst temperature sensor 27 in the present embodiment.

According to the graph, when the heat insulation partition 21b is provided in the DOC 21, the temperature of the center portion of the DOC 21 reaches the catalyst activation lower limit temperature T_{CL} at time t₁. It is understood that the center portion of the DOC 21 is heated to the catalyst activation lower limit temperature TLC in a period of time shorter than or equal to half of a time that is taken in the case indicated by the dashed line where the heat insulation partition 21b is not provided and the corresponding time is t₂. Therefore, by providing the heat insulation partition 21b and stopping the operation of the first plasma actuator 23 during a warm-up, it is possible to improve purification of exhaust gas during a warm-up of the engine 10 by further quickly activating only the center portion of the DOC 21. It appears that the temperature T_{C} that is detected by the catalyst temperature sensor 27, that is, the temperature of the outer peripheral end of the DOC 21, steeply rises after time t₃ at which the temperature of the outer peripheral end of the DOC 21 reaches the catalyst activation lower limit temperature T_{CL} from time to at which the engine 10 is started. The reason is that the first plasma actuator 23 begins to operate at time t₃ at which the temperature of the outer peripheral end of the DOC 21 has reached the catalyst activation lower limit temperature T_{CL} and exhaust gas flows into the DOC 21 in a diffused state. That is, by operating the first plasma actuator 23 at time t₃ at which the acquired temperature T_{C} of the DOC 21 has reached the catalyst activation lower limit temperature T_{CL}, it is possible to further early effectively cause the whole DOC 21 to function.

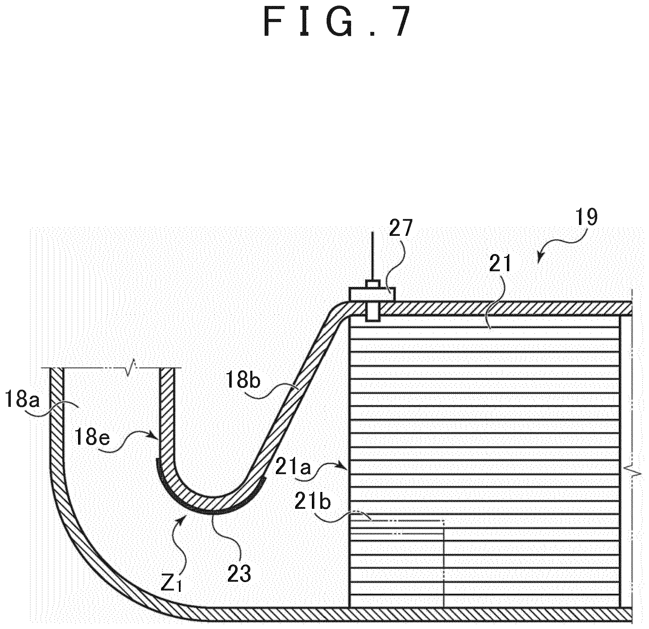

It should be noted that the position of the heat insulation partition 21b with respect to the DOC 21 may significantly deviate from the center portion of the DOC 21, which is described in the case of the present embodiment, because of the shape of the cone portion 18b, an angle at which the exhaust pipe 18 is connected to the cone portion 18b, and the like. When the heat insulation partition 21b is not provided in the catalytic converter, the temperature T_{C} of the DOC 21, which is acquired by the above-described catalyst temperature sensor 27, is desirably the temperature of the zone at the outer peripheral end of the upstream end face 21a of the DOC 21. FIG. 7 shows the sectional structure of such a first exhaust gas treatment unit according to another embodiment. In the present embodiment, because the heat insulation partition 21b is not provided in the DOC 21, the catalyst temperature sensor 27 is attached to the outer peripheral end of the upstream end face 21 a of the DOC 21 at a portion farthest from the exhaust pipe 18 that is connected to the cone portion 18b. The first plasma actuator 23 is installed in the first exhaust gas burble zone Z₁ having a convex curved face of a zone in which the exhaust pipe 18 is connected to the cone portion 18b. When the heat insulation partition 21b is provided in the DOC 21, the heat insulation partition 21b may be provided at a portion indicated by the alternate long and two-short dashes line in FIG. 7, and may be provided as an air gap as described above.

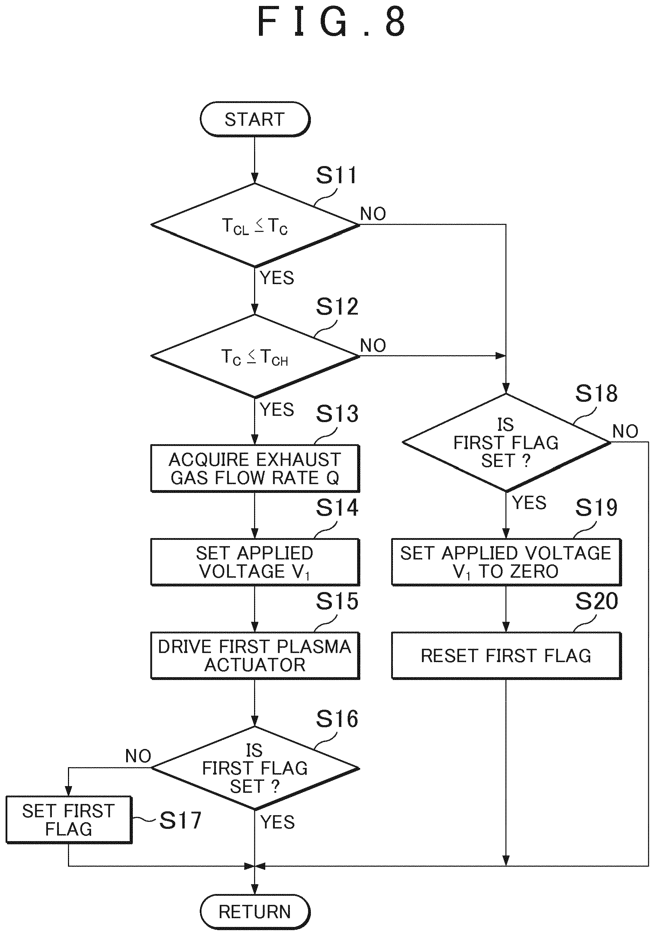

The procedure of operating the above-described first plasma actuator 23 will be described with reference to the flowchart of FIG. 8. Initially, in step S11, it is determined whether the catalyst temperature T_{C} is higher than or equal to the catalyst activation lower limit temperature T_{CL}. When it is determined that the catalyst temperature Tc is higher than or equal to the catalyst activation lower limit temperature T_{CL}, that is, when it is determined that the catalyst temperature T_{C} is a temperature at which there is a possibility that the first plasma actuator 23 is allowed to be operated, the process proceeds to step S12. In step S12, it is determined whether the catalyst temperature T_{C} is lower than or equal to the upper limit temperature T_{CH}. When it is determined that the catalyst temperature T_{C} is lower than or equal to the upper limit temperature T_{CH}, that is, when it is desirable to diffuse exhaust gas over the entire area of the DOC 21 by operating the first plasma actuator 23, the process proceeds to step S13. In step S13, the exhaust gas flow rate Q is acquired. Subsequently, in step S14, the applied voltage V₁ corresponding to the acquired exhaust gas flow rate Q is set. Then, in step S15, the first plasma actuator 23 is driven at the set applied voltage V₁.

Thus, air current commensurate with the exhaust gas flow rate Q is generated toward the DOC 21 along the part of the wall face 18e of the exhaust passage 18a in the first exhaust gas burble zone Z₁. As a result, exhaust gas flowing along the part of the wall face 18e of the exhaust passage 18a in the first exhaust gas burble zone Z₁ is dragged by the air current, flows without burbling away from the part of the wall face 18e of the exhaust passage 18a, and then flows over the entire area of the DOC 21 in a diffused state. Thus, it is possible to effectively utilize the DOC 21 at a maximum.

After that, it is determined in step S16 whether a first flag is set. However, because the first flag is not set at first, the process proceeds to step S17. In step S17, the first flag is set, and then the process returns to step S11 again.

On the other hand, when it is determined in step S11 that the catalyst temperature T_{C} is lower than the catalyst activation lower limit temperature T_{CL}, that is, when it is desirable to quickly raise the temperature of the zone of the DOC 21, surrounded by the heat insulation partition 21b, the process proceeds to step S18. As in the case where it is determined in step S12 that the catalyst temperature T_{C} is higher than the upper limit temperature T_{CH}, the process proceeds to step S18. In step S18, it is determined whether the first flag is set. When it is determined that the first flag is set, the operation of the first plasma actuator 23 is stopped by setting the applied voltage V₁ to zero in step S19, the first flag is reset in step S20, and then the process returns to step S11 again. Thus, it is possible to avoid supplying unnecessary electric power to the first plasma actuator 23.

When it is determined in step S11 that the catalyst temperature T_{C} is lower than the catalyst activation lower limit temperature T_{CL}, the operation of the first plasma actuator 23 is stopped. Thus, exhaust gas disproportionately flows from the first exhaust gas burble zone Z₁ into the zone surrounded by the heat insulation partition 21b of the DOC 21. As a result, it is possible to further quickly raise the temperature of the zone surrounded by the heat insulation partition 21b of the DOC 21 to the activation lower limit temperature T_{CL} or higher, so it is possible to facilitate purification of exhaust gas during a warm-up of the engine 10.

A swelled portion 28 is provided in the exhaust pipe 18 downstream of the exhaust gas control apparatus 19. The swelled portion 28 has an increased passage sectional area. A partition wall 29 is arranged in the exhaust passage 18a. The partition wall 29 extends along the flow direction of exhaust gas so as to partition off a space in the swelled portion 28. An inlet portion 28a is provided between the upstream end of the partition wall 29 and the wall face 18e that defines the swelled portion 28 of the exhaust pipe 18. An outlet portion 28b is provided between the downstream end of the partition wall 29 and the wall face 18e that defines the swelled portion 28 of the exhaust pipe 18. The inlet portion 28a is used to cause exhaust gas to flow into the swelled portion 28 side. The outlet portion 28b is used to cause exhaust gas in the swelled portion 28 to flow out. Thus, the exhaust passage 18a downstream of the exhaust gas control apparatus 19 is branched into a main exhaust passage 18c and an auxiliary exhaust passage 18d. The main exhaust passage 18c is not bypassed to the swelled portion 28. The auxiliary exhaust passage 18d is bypassed to the swelled portion 28. The exhaust heat recovery device 20 communicates with a water jacket 30a provided in a cylinder block 30. The exhaust heat recovery device 20 is arranged in the auxiliary exhaust passage 18d, and exchanges heat between exhaust gas flowing through the auxiliary exhaust passage 18d and coolant of the engine 10. The exhaust heat recovery device 20 serves as a second exhaust gas treatment unit of the invention. The exhaust heat recovery device 20 is used to achieve an early warm-up of the engine 10 by raising the temperature of coolant by the use of heat of exhaust gas. For this purpose, the above-described DPF 22 may be arranged in the exhaust passage 18a at a portion downstream of the exhaust heat recovery device 20. In this case, it is possible to further efficiently recover exhaust heat.

In the case of the embodiment shown in FIG. 3, there is a second exhaust gas burble zone Z₂ in which exhaust gas flowing along a part of the wall face 18e, which defines an upstream branching zone of the swelled portion 28, burbles away from the part of the wall face 18e and, as a result, the amount of exhaust gas flowing into the swelled portion 28 is reduced. A second plasma actuator 31 is arranged at the part of the wall face 18e of the exhaust passage 18a in the second exhaust gas burble zone Z₂. The sectional shape of the second exhaust gas burble zone Z₂, taken along the flow direction of exhaust gas, includes a convex curved line. The second plasma actuator 31 is used to generate air current toward the exhaust heat recovery device 20 along the part of the wall face 18e. The second plasma actuator 31 basically has the same configuration as the above-described first plasma actuator 23, and is connected to the inverter 24 via a second switch 32. The on/off state of the second switch 32 is controlled by the ECU 17. However, an applied voltage V₂, a driving frequency, and the like, to the second plasma actuator 31 by the inverter 24 are constant values set in advance in response to the curvature of the second exhaust gas burble zone Z₂.

A clearance W₁ from a part of a wall face 28c of the swelled portion 28, which defines the auxiliary exhaust passage 18d, to the partition wall 29 along a direction perpendicular to the partition wall 29 is set so as to be shorter than a clearance W₂ from the same wall face 28c to a part of the wall face 28e, which defines the exhaust passage 18a just before branching along the direction perpendicular to the partition wall 29. In other words, a distance from the center of the main exhaust passage 18c to the wall face 18e that defines the exhaust passage 18a just before branching is set so as to be shorter than a distance from the center of the main exhaust passage 18c to the partition wall 29. Thus, it is possible to suppress an unnecessary rise in the temperature of coolant by making part of exhaust gas difficult to flow into the exhaust heat recovery device 20 side after completion of a warm-up of the engine 10. In order to reliably suppress an unnecessary rise in the temperature of coolant after completion of a warm-up, a mechanical shutter mechanism for opening or closing the outlet portion 28b may be incorporated. However, it should be noted that component cost, maintenance, and the like, are required for incorporating a mechanical shutter mechanism. In the present embodiment, because there is no movable portion for opening or closing the inlet portion 28a or the outlet portion 28b, reliability is high, and it is possible to reduce component cost and pressure loss.

A coolant temperature sensor 33 is arranged in the cylinder block 30. The coolant temperature sensor 33 acquires the temperature T_{W} of coolant of the engine 10 and outputs the detected information to the ECU 17. The coolant of the engine 10 flows through the water jacket 30a. The ECU 17 operates the second plasma actuator 31 by switching the second switch 32 to the energized state only when the acquired temperature Tw of coolant is lower than a temperature T_{WL} set in advance.

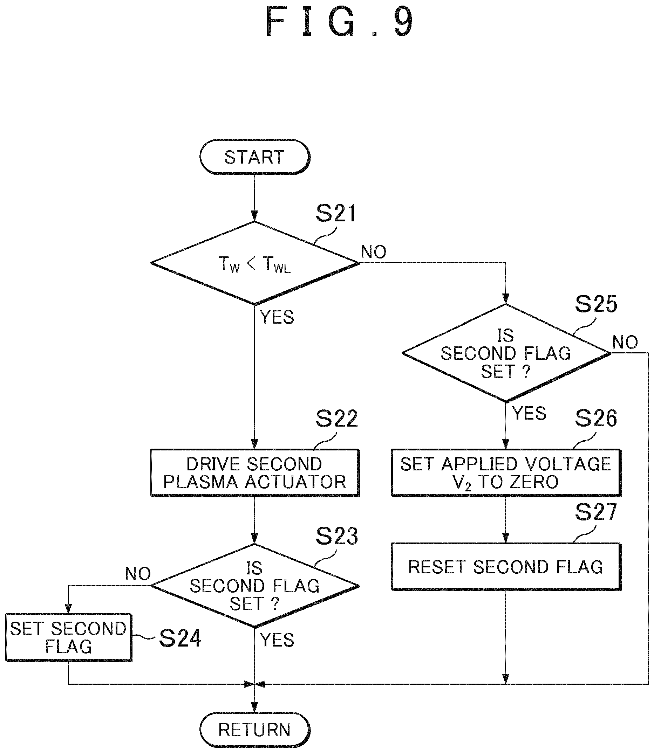

The procedure of operating the second plasma actuator 31 will be described with reference to the flowchart shown in FIG. 9. Initially, in step S21, it is determined whether the coolant temperature Tw is lower than the lower limit coolant temperature T_{WL}. When the coolant temperature Tw is lower than the lower limit coolant temperature T_{WL}, that is, when it is determined that a warm-up of the engine 10 is required, the second plasma actuator 31 is driven in step S22. Thus, it is possible to efficiently guide part of exhaust gas, which has passed through the exhaust gas control apparatus 19, to the auxiliary exhaust passage 18d via the inlet portion 28a. Exhaust gas guided to the auxiliary exhaust passage 18d exchanges heat with coolant while passing through the exhaust heat recovery device 20, raises the temperature of coolant, flows out from the auxiliary exhaust passage 18d via the outlet portion 28b, merges into exhaust gas flowing through the main exhaust passage 18c, and then flows down to the muffler side. Subsequently, in step S23, it is determined whether a second flag is set. Because the second flag is not set at first, the process proceeds to step S24. In step S24, the second flag is set, and then the process returns to step S21 again.

In this way, electric power is supplied to the second plasma actuator 31 until the coolant temperature Tw becomes higher than or equal to the lower limit coolant temperature T_{WL}, and the coolant temperature is raised by guiding part of exhaust gas to the exhaust heat recovery device 20. Thus, a warm-up is facilitated.

When it is determined in step S21 that the coolant temperature T_{W} is higher than or equal to the lower limit coolant temperature T_{WL}, that is, when a warm-up of the engine 10 has completed, the process proceeds to step S25. In step S25, it is determined whether the second flag is set. When it is determined that the second flag is set, that is, when electric power is being supplied to the second plasma actuator 31, the process proceeds to step S26. The operation of the second plasma actuator 31 is stopped by setting the voltage V₂, applied to the second plasma actuator 31, to zero in step S26. After that, the process proceeds to step S27, the second flag is reset, and the process returns to step S21 again.

In this state, part of exhaust gas is difficult to flow into the auxiliary exhaust passage 18d via the inlet portion 28a because of a step between the partition wall 29 and the wall face 18e that defines the exhaust passage 18a just before branching, so it is possible to suppress an unnecessary rise in the coolant temperature. It is also possible to prevent supply of unnecessary electric power to the second plasma actuator 31 after completion of a warm-up of the engine 10.

The invention should be interpreted from the subject-matter described in the appended claims. All the matters in the above-described embodiment are not intended to limit the invention, and can be modified within the scope of the appended claims.

## Claims

1. An exhaust gas treatment apparatus for an internal combustion engine (10), the exhaust gas treatment apparatus comprising an exhaust gas treatment unit (21; 20) arranged in an exhaust passage (18a) of the internal combustion engine (10), the exhaust passage (18a) being configured such that i) exhaust gas flowing along a part of a wall face (18e), which defines the exhaust passage (18a), burbles away from the part of the wall face (18e) in an exhaust gas burble zone (Z₁, Z₂) and ii) as a result of burble of exhaust gas away from the part of the wall face (18e) of the exhaust passage (18a) in the exhaust gas burble zone (Z₁; Z₂), exhaust gas disproportionately flows into the exhaust gas treatment unit (21; 20) or the amount of exhaust gas flowing into the exhaust gas treatment unit (21; 20) reduces;
**characterized by** comprising:
a plasma actuator (23; 31) arranged at the part of the wall face (18e) of the exhaust passage (18a) in the exhaust gas burble zone (Z₁,; Z₂), the plasma actuator (23; 31) being configured to generate air current toward the exhaust gas treatment unit (21; 20) along the part of the wall face (18e) in exhaust gas inside the exhaust passage (18a).

2. The exhaust gas treatment apparatus according to claim 1, wherein a sectional shape of the part of the wall face (18e) of the exhaust passage (18a) in the exhaust gas burble zone (Z₁,; Z₂), taken along a flow direction of exhaust gas, includes a convex curved line.

3. The exhaust gas treatment apparatus according to claim 1 or 2, further comprising a controller (17) configured to control the amount of energy that is input to the plasma actuator (23; 31) based on a flow rate (Q) of exhaust gas flowing through the exhaust passage (18a) and/or a temperature (T_{C}) of a catalytic converter (21) included in the exhaust gas treatment unit (21; 20) and configured to purify exhaust gas and/or a temperature (Tw) of a coolant of the internal combustion engine (10).

4. The exhaust gas treatment apparatus according to claim 3, further comprising:
a flow rate acquisition device (16) configured to acquire the flow rate (Q) of exhaust gas flowing through the exhaust passage (18a); wherein
the controller (17) is configured to control the plasma actuator (23) such that the amount of energy that is input to the plasma actuator (23) increases as the acquired flow rate (Q) of exhaust gas increases.

5. The exhaust gas treatment apparatus according to claim 3 or 4, further comprising:
a temperature acquisition device (27) configured to acquire the temperature (T_{C}) of the catalytic converter (21), wherein
the controller (17) is configured to input energy to the plasma actuator (23), when the acquired temperature (T_{C}) of the catalytic converter (21) is higher than or equal to an activation lower limit temperature (T_{CL}) of the catalytic converter (21) and/or when the acquired temperature (T_{C}) of the catalytic converter (21) is lower than or equal to an upper limit temperature (T_{CH}) of the catalytic converter (21).

6. The exhaust gas treatment apparatus according to any one of claims 3 to 5, wherein
the catalytic converter (21) includes a cylindrical heat insulation partition (21b), preferably an air layer, surrounding a zone of part of the catalytic converter (21) along a flow direction of exhaust gas, and
the zone surrounded by the heat insulation partition (21b) includes a zone into which exhaust gas disproportionately flows as a result of burble of exhaust gas away from the part of the wall face (18e) of the exhaust passage (18a) in the exhaust gas burble zone (Z₁).

7. The exhaust gas treatment apparatus according to claim 6, wherein
the length of the heat insulation partition (21b) along the flow direction of exhaust gas is shorter than the length of the catalytic converter (21) along the flow direction of exhaust gas, and
an upstream end of the heat insulation partition (21b) along the flow direction of exhaust gas is located at an upstream end (21a) of the catalytic converter (21) along the flow direction of exhaust gas.

8. The exhaust gas treatment apparatus according to any one of claims 4 to 7, wherein the acquired temperature (T_{C}) of the catalytic converter (21) is a temperature of a zone different from a zone into which exhaust gas disproportionately flows because of the exhaust gas burble zone (Z₁).

9. The exhaust gas treatment apparatus according to claim 3, wherein
the exhaust passage (18a) is branched into two branched exhaust passages (18c, 18d) by a partition wall (29) extending along a flow direction of exhaust gas,
the exhaust gas treatment unit (21; 20) includes an exhaust heat recovery device (20) arranged in one of the branched exhaust passages (18d) and configured to exchange heat between exhaust gas flowing through the one of the branched exhaust passages (18d) and coolant of the internal combustion engine (10),
the exhaust gas burble zone (Z₂) is located at a portion at which the exhaust passage (18a) is branched, and
the exhaust passage (18a) is configured such that the amount of exhaust gas flowing into the one of the branched exhaust passages (18d) reduces as a result of burble of exhaust gas away from a part of a wall face (18e) of the exhaust passage (18a) in the exhaust gas burble zone (Z₂).

10. The exhaust gas treatment apparatus according to claim 9, further comprising:
a coolant temperature sensor (33) configured to acquire the temperature (Tw) of coolant of the internal combustion engine (10); wherein
the controller (17) is configured to input energy to the plasma actuator (23), when the acquired temperature (T_{W}) of coolant is lower than a temperature (T_{WL}) set in advance.

11. An exhaust gas treatment method for an internal combustion engine (10), wherein an exhaust gas treatment unit (21; 20) is arranged in an exhaust passage (18a) of the internal combustion engine, the exhaust passage (18a) being configured such that i) exhaust gas flowing along a part of a wall face (18e), which defines the exhaust passage (18a), burbles away from the part of the wall face (18e) in an exhaust gas burble zone (Z₁; Z₂) and ii) as a result of burble of exhaust gas away from the part of the wall face (18e) of the exhaust passage (18a) in the exhaust gas burble zone (Z₁; Z₂), exhaust gas disproportionately flows into the exhaust gas treatment unit (21; 20) arranged in the exhaust passage (18a) or the amount of exhaust gas flowing into the exhaust gas treatment unit (21; 20) reduces,
**characterized by** comprising:
arranging a plasma actuator (23; 31) at the part of the wall face (18e) of the exhaust passage (18a) in the exhaust gas burble zone (Z₁; Z₁₂), and
inputting energy to the plasma actuator (23; 31) so as to generate air current along the wall face (18e) of the exhaust passage (18a) in exhaust gas inside the exhaust passage (18a).

12. The exhaust gas treatment method according to claim 11, further comprising:
controlling the amount of energy that is input to the plasma actuator (23; 31) based on a flow rate (Q) of exhaust gas flowing through the exhaust passage (18a) and/or a temperature (T_{C}) of a catalytic converter (21) included in the exhaust gas treatment unit (21; 20) and configured to purify exhaust gas and/or a temperature (T_{W}) of a coolant of the internal combustion engine (10).

13. The exhaust gas treatment method according to claim 12, further comprising:
acquiring the temperature (T_{C}) of the catalytic converter (21); and
when the acquired temperature (T_{C}) of the catalytic converter (21) is higher than or equal to an activation lower limit temperature (T_{CL}) of the catalytic converter (21) and/or when the acquired temperature (T_{C}) of the catalytic converter (21) is lower than or equal to an upper limit temperature (T_{CH}) of the catalytic converter (21), inputting energy to the plasma actuator (23).

14. The exhaust gas treatment method according to claim 12 or 13, further comprising:
acquiring an exhaust gas flow rate (Q) flowing through the exhaust passage (18a); and
inputting larger energy to the plasma actuator (23) as the acquired exhaust gas flow rate (Q) increases.

15. The exhaust gas treatment method according to claim 12, wherein the exhaust passage (18a) is branched into two branched exhaust passages (18c, 18d) by a partition wall (29) extending along a flow direction of exhaust gas, the exhaust gas treatment unit (21; 20) includes an exhaust heat recovery device (20) arranged in one of the branched exhaust passages (18d) and configured to exchange heat between exhaust gas flowing through the one of the branched exhaust passages (18d) and coolant of the internal combustion engine (10), the exhaust gas burble zone (Z₂) is located at a portion at which the exhaust passage (18a) is branched, and the exhaust passage (18a) is configured such that the amount of exhaust gas flowing into the one of the branched exhaust passages (18d) reduces as a result of burble of exhaust gas away from a part of a wall face (18e) of the exhaust passage (18a) in the exhaust gas burble zone (Z₂),
the method further comprising:
acquiring the temperature (T_{W}) of coolant of the internal combustion engine (10); and
inputting energy to the plasma actuator (23), when the acquired temperature (Tw) of coolant is lower than a temperature (T_{WL}) set in advance.

## Patentansprüche

1. Abgasbehandlungsvorrichtung für einen Verbrennungsmotor (10), wobei die Abgasbehandlungsvorrichtung eine in einem Abgaskanal (18a) des Verbrennungsmotors (10) angeordnete Abgasbehandlungseinheit (21; 20) aufweist, und der Abgaskanal (18a) dafür angepasst ist, dass i) Abgas, das entlang eines Teils einer Wandfläche (18e), die den Abgaskanal (18a) definiert, strömt, von dem Teil der Wandfläche (18e) in einer Abgasabrisszone (Z₁, Z₂) abreißt und ii) als Ergebnis eines Abrisses des Abgases von dem Teil der Wandfläche (18e) des Abgaskanals (18a) in der Abgasabrisszone (Z₁; Z₂), das Abgas unproportional in die Abgasbehandlungseinheit (21; 20) strömt oder die in die Abgasbehandlungseinheit (21; 20) strömende Abgasmenge abnimmt;
**gekennzeichnet durch**:
einen an dem Teil der Wandfläche (18e) des Abgaskanals (18a) in der Abgasabrisszone (Z₁; Z₂) angeordneten Plasmaaktuator (23; 31), wobei der Plasmaaktuator (23; 31) dafür angepasst ist, einen Luftstrom im Abgas entlang des Teils der Wandfläche (18e) innerhalb des Abgaskanals (18a) zu der Abgasbehandlungseinheit (21; 20) hin zu erzeugen.

2. Abgasbehandlungsvorrichtung nach Anspruch 1, wobei eine Querschnittsform des Teils der Wandfläche (18e) des Abgaskanals (18a) in der Abgasabrisszone (Z₁; Z₂), die entlang einer Strömungsrichtung des Abgases genommen wird, eine konvex gekrümmte Linie aufweist.

3. Abgasbehandlungsvorrichtung nach Anspruch 1 oder 2, wobei sie ferner eine Steuerung (17) aufweist, die dafür angepasst ist die Energiemenge, die in den Plasmaaktuator (23; 31) eingegeben wird, basierend auf einer Durchflussrate (Q) des Abgases, das durch den Abgaskanal (18a) strömt, und / oder einer Temperatur (Tc) eines Katalysators (21), der in der Abgasbehandlungseinheit (21; 20) zur Abgasreinigung enthalten ist, und / oder einer Temperatur (Tw) eines Kühlmittels des Verbrennungsmotors (10), zu steuern.

4. Abgasbehandlungsvorrichtung nach Anspruch 3 ferner mit:
einer Strömungsratenerfassungsvorrichtung (16), die dafür angepasst ist, die Durchflussrate (Q) des Abgases, das durch den Abgaskanal (18a) strömt, zu erfassen; wobei
die Steuerung (17) dafür angepasst ist den Plasmaaktuator (23) so zu steuern, dass die Energiemenge, die in den Plasmaaktuator (23) eingegeben wird, mit zunehmender erfasster Durchflussrate (Q) des Abgases zunimmt.

5. Abgasbehandlungsvorrichtung nach Anspruch 3 oder 4, ferner mit:
einer Temperaturerfassungseinrichtung (27), die zur Erfassung der Temperatur (Tc) des Katalysators (21) angepasst ist, wobei
die Steuerung (17) dafür angepasst ist, dass sie an den Plasmaaktuator (23) Energie eingibt, wenn die erfasste Temperatur (Tc) des Katalysators (21) höher oder gleich einer unteren Aktivierungs-Grenztemperatur (T_{CL}) des Katalysators (21) ist und / oder wenn die erfasste Temperatur (Tc) des Katalysators (21) kleiner oder gleich einer oberen Grenztemperatur (T_{CH}) des Katalysators (21) ist.

6. Abgasbehandlungsvorrichtung nach einem der Ansprüche 3 bis 5, wobei
der Katalysator (21) eine zylindrische Wärmedämmtrennwand (21 b) aufweist, vorzugsweise eine Luftschicht, die eine Zone eines Teils des Katalysators (21) entlang einer Abgas-Strömungsrichtung umgibt, und
die von der Wärmedämmtrennwand (21 b) umgebende Zone eine Zone aufweist, in die das Abgas infolge des Abrisses des Abgases von dem Teil der Wandfläche (18e) des Abgaskanals (18a) in der Abgasabrisszone (Z₁) unproportional strömt.

7. Abgasbehandlungsvorrichtung nach Anspruch 6, wobei
die Länge der Wärmedämmtrennwand (21 b) entlang der Strömungsrichtung des Abgases kürzer ist, als die Länge des Katalysators (21) entlang der Strömungsrichtung des Abgases, und
ein entlang der Strömungsrichtung des Abgases stromaufwärtiges Ende der Wärmedämmtrennwand (21 b) sich an einem entlang der Strömungsrichtung des Abgases stromaufwärtigen Ende (21 a) des Katalysators (21) befindet.

8. Abgasbehandlungsvorrichtung nach einem der Ansprüche 4 bis 7, wobei die erfasste Temperatur (Tc) des Katalysators (21) eine Temperatur einer Zone ist, die sich von einer Zone unterscheidet, in die das Abgas aufgrund der Abgasabrisszone (Z₁) unproportional strömt.

9. Abgasbehandlungsvorrichtung nach Anspruch 3, wobei
der Abgaskanal (18a) durch eine sich entlang einer Strömungsrichtung des Abgases erstreckende Trennwand (29) in zwei verzweigte Abgaskanäle (18c, 18d) verzweigt ist,
die Abgasbehandlungseinheit (21; 20) eine Abgaswärmerückgewinnungsvorrichtung (20) aufweist, die in einem der verzweigten Abgaskanäle (18d) angeordnet ist und dafür angepasst ist, Wärme zwischen dem Abgas, das durch den einen der verzweigten Abgaskanäle (18d) strömt, und einem Kühlmittel des Verbrennungsmotors (10) zu übertragen,
die Abgasabrisszone (Z₂) an einem Abschnitt angeordnet ist, an dem der Abgaskanal (18a) abzweigt, und
der Abgaskanal (18a) dafür angepasst ist, dass die Abgasmenge, die in den einen der verzweigten Abgaskanäle (18d) einströmt, infolge eines Abgas Abrisses von einem Teil einer Wandfläche (18e) des Abgaskanals (18a) in der Abgasabrisszone (Z₂) abnimmt.

10. Abgasbehandlungsvorrichtung nach Anspruch 9, ferner mit:
einem Kühlmitteltemperatursensor (33), der dafür angepasst ist die Temperatur (Tw) des Kühlmittels des Verbrennungsmotors (10) zu erfassen; wobei
die Steuerung (17) dafür angepasst ist, Energie an den Plasmaaktuator (23) einzugeben, wenn die erfasste Temperatur (Tw) des Kühlmittels niedriger als eine zuvor eingestellte Temperatur (T_{WL}) ist.

11. Abgasbehandlungsverfahren für einen Verbrennungsmotor (10), wobei in einem Abgaskanal (18a) des Verbrennungsmotors (10) eine Abgasbehandlungseinheit (21; 20) angeordnet ist, und der Abgaskanal (18a) dafür angepasst ist, dass i) Abgas, das entlang eines Teils einer Wandfläche (18e), die den Abgaskanal (18a) definiert, strömt, von dem Teil der Wandfläche (18e) in einer Abgasabrisszone (Z₁; Z₂) abreißt und ii) als Ergebnis eines Abrisses des Abgases von dem Teil der Wandfläche (18e) des Abgaskanals (18a) in der Abgasabrisszone (Z₁; Z₂), das Abgas unproportional in die Abgasbehandlungseinheit (21, 20), die in dem Abgaskanal (18a) angeordnet ist, strömt oder die in die Abgasbehandlungseinheit (21; 20) strömende Abgasmenge abnimmt,
**gekennzeichnet durch**:
Anordnen eines Plasmaaktuators (23; 31) an dem Teil der Wandfläche (18e) des Abgaskanals (18a) in der Abgasabrisszone (Z₁; Z₂) und
Eingeben von Energie in den Plasmaaktuator (23; 31), um so einen Luftstrom entlang der Wandfläche (18e) des Abgaskanals (18a) im Abgas innerhalb des Abgaskanals (18a) zu erzeugen.

12. Abgasbehandlungsverfahren nach Anspruch 11, ferner **gekennzeichnet durch**:
Steuern der Energiemenge, die in den Plasmaaktuator (23; 31) eingegeben wird, basierend auf einer Durchflussrate (Q) des Abgases durch den Abgaskanal (18a) und / oder einer Temperatur (Tc) eines Katalysators (21), der in der Abgasbehandlungseinheit (21; 20) zur Abgasreinigung enthalten ist, und / oder einer Temperatur (Tw) eines Kühlmittels des Verbrennungsmotors (10).

13. Abgasbehandlungsverfahren nach Anspruch 12, ferner **gekennzeichnet durch**:
Erfassen der Temperatur (Tc) des Katalysators (21); und
wenn die erfasste Temperatur (Tc) des Katalysators (21) größer oder gleich einer unteren Aktivierungsgrenztemperatur (T_{CL}) des Katalysators (21) ist und / oder wenn die erfasste Temperatur (Tc) des Katalysators (21) kleiner oder gleich einer oberen Grenztemperatur (T_{CH}) des Katalysators (21) ist, Zuführen von Energie an den Plasmaaktuator (23).

14. Abgasbehandlungsverfahren nach Anspruch 12 oder 13, ferner
**gekennzeichnet durch**:
Erfassen einer Durchflussrate (Q) von Abgas, das durch den Abgaskanal (18a) strömt; und
Zuführen höherer Energie an den Plasmaaktuator (23), wenn die erfasste Abgas-Durchflussrate (Q) zunimmt.

15. Abgasbehandlungsverfahren nach Anspruch 12, in dem der Abgaskanal (18a) durch eine Trennwand (29), die sich entlang einer Strömungsrichtung des Abgases erstreckt, in zwei verzweigte Abgaskanäle (18c, 18d) verzweigt ist, die Abgasbehandlungseinheit (21; 20) eine Abgaswärmerückgewinnungsvorrichtung (20) aufweist, die in einem der verzweigten Abgaskanäle (18d) angeordnet ist und dafür angepasst ist, Wärme zwischen dem Abgas, das durch den einen der verzweigten Abgaskanäle (18d) strömt, und einem Kühlmittel des Verbrennungsmotors (10) zu übertragen, die Abgasabrisszone (Z₂) an einem Abschnitt angeordnet ist, an dem der Abgaskanal (18a) abzweigt, und der Abgaskanal (18a) dafür angepasst ist, dass die Abgasmenge, die in den einen der verzweigten Abgaskanäle (18d) einströmt, infolge eines Abgas Abrisses von einem Teil einer Wandfläche (18e) des Abgaskanals (18a) in der Abgasabrisszone (Z₂) abnimmt,
wobei das Verfahren ferner **gekennzeichnet ist durch**:
Erfassen der Temperatur (Tw) des Kühlmittels des Verbrennungsmotors (10); und
Zuführen von Energie an den Plasmaaktuator (23), wenn die erfasste Temperatur (Tw) des Kühlmittels niedriger als eine vorher eingestellte Temperatur (T_{WL}) ist.

## Revendications

1. Appareil de traitement de gaz d'échappement pour un moteur à combustion interne (10), l'appareil de traitement de gaz d'échappement comprenant une unité de traitement de gaz d'échappement (21 ; 20) agencée dans un passage d'échappement (18a) du moteur à combustion interne (10), le passage d'échappement (18a) étant configuré de sorte que i) le gaz d'échappement s'écoulant le long d'une partie d'une face de paroi (18e), qui définit le passage d'échappement (18a), se décolle de la partie de la face de paroi (18e) dans une zone de décollement de gaz d'échappement (Z₁, Z₂) et ii) en raison du décollement du gaz d'échappement de la partie de la face de paroi (18e) du passage d'échappement (18a) dans la zone de décollement de gaz d'échappement (Z₁, Z₂), le gaz d'échappement s'écoule de manière disproportionnée dans l'unité de traitement de gaz d'échappement (21 ; 20) ou bien la quantité de gaz d'échappement s'écoulant dans l'unité de traitement de gaz d'échappement (21 ; 20) se réduit ;
**caractérisé en ce qu'**il comprend :
un actionneur de plasma (23 ; 31) agencé au niveau de la partie de la face de paroi (18e) du passage d'échappement (18a) dans la zone de décollement de gaz d'échappement (Z₁; Z₂), l'actionneur de plasma (23 ; 31) étant configuré pour générer un courant d'air vers l'unité de traitement de gaz d'échappement (21 ; 20) le long de la partie de la face de paroi (18e) dans le gaz d'échappement à l'intérieur du passage d'échappement (18a).

2. Appareil de traitement de gaz d'échappement selon la revendication 1, dans lequel une forme transversale de la partie de la face de paroi (18e) du passage d'échappement (18a) dans la zone de décollement de gaz d'échappement (Z₁, Z₂) prise le long d'une direction d'écoulement du gaz d'échappement, comprend
une ligne incurvée convexe.

3. Appareil de traitement de gaz d'échappement selon la revendication 1 ou 2, comprenant en outre un organe de commande (17) configuré pour commander la quantité d'énergie qui est introduite dans l'actionneur de plasma (23 ; 31) en fonction d'un débit (Q) de gaz d'échappement s'écoulant à travers le passage d'échappement (18a) et/ou d'une température (T_{C}) d'un convertisseur catalytique (21) compris dans l'unité de traitement de gaz d'échappement (21 ; 20) et configuré pour purifier le gaz d'échappement et/ou d'une température (Tw) d'un réfrigérant du moteur à combustion interne (10).

4. Appareil de traitement de gaz d'échappement selon la revendication 3, comprenant en outre :
un dispositif d'acquisition de débit (16) configuré pour acquérir le débit (Q) de gaz d'échappement s'écoulant à travers le passage d'échappement (18a) ; dans lequel :
l'organe de commande (17) est configuré pour commander l'actionneur de plasma (23) de sorte que la quantité d'énergie qui est introduite dans l'actionneur de plasma (23) augmente au fur et à mesure que le débit (Q) de gaz d'échappement acquis augmente.

5. Appareil de traitement de gaz d'échappement selon la revendication 3 ou 4, comprenant en outre :
un dispositif d'acquisition de température (27) configuré pour acquérir la température (Tc) du convertisseur catalytique (21), dans lequel :
l'organe de commande (17) est configuré pour introduire l'énergie dans l'actionneur de plasma (23), lorsque la température (T_{C}) acquise du convertisseur catalytique (21) est supérieure ou égale à une température de limite inférieure d'activation (T_{CL}) du convertisseur catalytique (21) et/ou lorsque la température acquise (T_{C}) du convertisseur catalytique (21) est inférieure ou égale à une température de limite supérieure (T_{CH}) du convertisseur catalytique (21).

6. Appareil de traitement de gaz d'échappement selon l'une quelconque des revendications 3 à 5, dans lequel :
le convertisseur catalytique (21) comprend une séparation d'isolation thermique cylindrique (21b), de préférence une couche d'air, entourant une zone d'une partie du convertisseur catalytique (21) le long d'une direction d'écoulement du gaz d'échappement, et
la zone entourée par la séparation d'isolation thermique (21b) comprend une zone dans laquelle le gaz d'échappement s'écoule de manière disproportionnée en raison du décollement du gaz d'échappement de la partie de la face de paroi (18e) du passage d'échappement (18a) dans la zone de décollement de gaz d'échappement (Z₁).

7. Appareil de traitement de gaz d'échappement selon la revendication 6, dans lequel :
la longueur de la séparation d'isolation thermique (21b) le long de la direction d'écoulement du gaz d'échappement est plus courte que la longueur du convertisseur catalytique (21) le long de la direction d'écoulement du gaz d'échappement, et
une extrémité en amont de la séparation d'isolation thermique (21b) le long de la direction d'écoulement du gaz d'échappement est positionnée au niveau d'une extrémité en amont (21a) du convertisseur catalytique (21) le long de la direction d'écoulement du gaz d'échappement.

8. Appareil de traitement de gaz d'échappement selon l'une quelconque des revendications 4 à 7, dans lequel la température (T_{C}) acquise du convertisseur catalytique (21) est une température d'une zone différente d'une zone dans laquelle le gaz d'échappement s'écoule, de manière disproportionnée, à cause de la zone de décollement de gaz d'échappement (Z₁).

9. Appareil de traitement de gaz d'échappement selon la revendication 3, dans lequel :
le passage d'échappement (18a) est ramifié en deux passages d'échappement (18c, 18d) ramifiés par une paroi de séparation (29) s'étendant le long d'une direction d'écoulement du gaz d'échappement,
l'unité de traitement de gaz d'échappement (21 ; 20) comprend un dispositif de récupération de chaleur d'échappement (20) agencé dans l'un des passages d'échappement (18d) ramifiés et configuré pour échanger la chaleur entre le gaz d'échappement s'écoulant par l'un des passages d'échappement (18d) ramifiés et le réfrigérant du moteur à combustion interne (10),
la zone de décollement de gaz d'échappement (Z₂) est positionnée au niveau d'une partie à laquelle le passage d'échappement (18a) est ramifié, et
le passage d'échappement (18a) est configuré de sorte que la quantité de gaz d'échappement s'écoulant dans l'un des passages d'échappement (18d) ramifiés se réduit en raison du décollement du gaz d'échappement d'une partie d'une face de paroi (18e) du passage d'échappement (18a) dans la zone de décollement de gaz d'échappement (Z₂).

10. Appareil de traitement de gaz d'échappement selon la revendication 9, comprenant en outre :
un capteur de température de réfrigérant (33) configuré pour acquérir la température (T_{W}) du réfrigérant du moteur à combustion interne (10) ; dans lequel :
l'organe de commande (17) est configuré pour introduire l'énergie dans l'actionneur de plasma (23), lorsque la température (Tw) acquise du réfrigérant est inférieure à une température (T_{WL}) déterminée à l'avance.

11. Procédé de traitement de gaz d'échappement pour un moteur à combustion interne (10), dans lequel une unité de traitement de gaz d'échappement (21 ; 20) est agencée dans un passage d'échappement (18a) d'un moteur à combustion interne, le passage d'échappement (18a) étant configuré de sorte que i) le gaz d'échappement s'écoulant le long d'une partie d'une face de paroi (18e), qui définit le passage d'échappement (18a), se décolle de la partie de la face de paroi (18e) dans une zone de décollement de gaz d'échappement (Z₁; Z₂) et ii) en raison du décollement du gaz d'échappement de la partie de la face de paroi (18e) du passage d'échappement (18a) dans la zone de décollement de gaz d'échappement (Z₁ ; Z₂), le gaz d'échappement s'écoule de manière disproportionnée dans l'unité de traitement de gaz d'échappement (21 ; 20) agencée dans le passage d'échappement (18a) ou bien la quantité de gaz d'échappement s'écoulant dans l'unité de traitement de gaz d'échappement (21 ; 20) se réduit,
**caractérisé en ce qu'**il comprend les étapes consistant à :
agencer un actionneur de plasma (23 ; 31) au niveau de la partie de la face de paroi (18e) du passage d'échappement (18a) dans la zone de décollement de gaz d'échappement (Z₁ ; Z₂), et
introduire l'énergie dans l'actionneur de plasma (23 ; 31) afin de générer un courant d'air le long de la face de paroi (18e) du passage d'échappement (18a) dans le gaz d'échappement à l'intérieur du passage d'échappement (18a).

12. Procédé de traitement de gaz d'échappement selon la revendication 11, comprenant en outre l'étape consistant à :
commander la quantité d'énergie qui a été introduite dans l'actionneur de plasma (23 ; 31) en fonction d'un débit (Q) de gaz d'échappement s'écoulant à travers le passage d'échappement (18a) et/ou d'une température (T_{C}) d'un convertisseur catalytique (21) compris dans l'unité de traitement de gaz d'échappement (21 ; 20) et configuré pour purifier le gaz d'échappement et/ou d'une température (T_{W}) d'un réfrigérant du moteur à combustion interne (10).

13. Procédé de traitement de gaz d'échappement selon la revendication 12, comprenant en outre les étapes consistant à :
acquérir la température (T_{C}) du convertisseur catalytique (21) ; et
lorsque la température (Tc) acquise du convertisseur catalytique (21) est supérieure ou égale à une température de limite inférieure d'activation (T_{CL}) du convertisseur catalytique (21) et/ou lorsque la température (Tc) acquise du convertisseur catalytique (21) est inférieure ou égale à une température de limite supérieure (T_{CH}) du convertisseur catalytique (21), introduire l'énergie dans l'actionneur de plasma (23).

14. Procédé de traitement de gaz d'échappement selon la revendication 12 ou 13, comprenant en outre les étapes consistant à :
acquérir un débit (Q) de gaz d'échappement s'écoulant à travers le passage d'échappement (18a) ; et
introduire plus d'énergie dans l'actionneur de plasma (23) au fur et à mesure que le débit (Q) de gaz d'échappement acquis augmente.

15. Procédé de traitement de gaz d'échappement selon la revendication 12, dans lequel le passage d'échappement (18a) est ramifié en deux passages d'échappement (18c, 18d) ramifiés par une paroi de séparation (29) s'étendant le long d'une direction d'écoulement du gaz d'échappement, l'unité de traitement de gaz d'échappement (21 ; 20) comprend un dispositif de récupération de chaleur d'échappement (20) agencé dans l'un des passages d'échappement (18d) ramifiés et configuré pour échanger la chaleur entre le gaz d'échappement s'écoulant par l'un des passages d'échappement (18d) ramifiés et le réfrigérant du moteur à combustion interne (10), la zone de décollement de gaz d'échappement (Z₂) est positionnée au niveau d'une partie à laquelle le passage d'échappement (18a) est ramifié, et le passage d'échappement (18a) est configuré de sorte que la quantité de gaz d'échappement s'écoulant dans l'un des passages d'échappement (18d) ramifiés se réduit en raison du décollement du gaz d'échappement d'une partie d'une face de paroi (18e) du passage d'échappement (18a) dans la zone de décollement de gaz d'échappement (Z₂),
le procédé comprenant en outre les étapes consistant à :
acquérir la température (T_{W}) du réfrigérant du moteur à combustion interne (10) ; et
introduire l'énergie dans l'actionneur de plasma (23), lorsque la température (T_{W}) acquise du réfrigérant est inférieure à une température (T_{WL}) déterminée à l'avance.
